# EUROPÄISCHE PATENTSCHRIFT

(11) **EP 2 678 795 B1**
(45) Veröffentlichungstag und Bekanntmachung des Hinweises auf die Patenterteilung: **27.05.2015**
(21) Anmeldenummer: 12710175.6
(22) Anmeldetag: 24.02.2012
(51) Int. Cl.: G06F 21/00

(54) **VERFAHREN ZUR ÖFFENTLICHEN BEREITSTELLUNG GESCHÜTZTER ELEKTRONISCHER DOKUMENTE**
METHOD FOR PUBLICLY PROVIDING PROTECTED ELECTRONIC DOCUMENTS
PROCÉDÉ DE FOURNITURE PUBLIQUE DE DOCUMENTS ÉLECTRONIQUES PROTÉGÉS

(30) Priorität: 25.02.2011 US 201161464008 P
(43) Veröffentlichungstag der Anmeldung: 01.01.2014
(73) Patentinhaber: BioID AG, 6072 Sachseln (CH)
(72) Erfinder: CHANG, Ho B., CH-6048 Horw (CH); SCHRÖTER, Klaus, 14197 Berlin (DE)
(74) Vertreter: Burger, Hannes
(86) Internationale Anmeldenummer: PCT/EP2012/053145
(87) Internationale Veröffentlichungsnummer: WO 2012/113901

(56) Entgegenhaltungen:
- WO-A2-2009/108779
- US-A1- 2005 162 523
- US-A1- 2006 110 011

## Beschreibung

Die Erfindung betrifft ein Verfahren zur öffentlichen Bereitstellung geschützter elektronischer Dokumente.

Mit der Verbreitung der Kommunikationsnetzwerke, insbesondere der Datenkommunikationsnetzwerke wie beispielsweise dem Internet, ist ein privater Benutzer oftmals mit dem Problem konfrontiert, ein eigenes elektronisches Dokument einer begrenzten bzw. einer gegebenenfalls unbegrenzten Anzahl öffentlicher Benutzer passiv zur Verfügung zu stellen. Als privater Benutzer oder Dokumentbereitsteller wird im Weiteren jener Benutzer verstanden, welcher ein eigenes elektronisches Dokument bereitstellen möchte bzw. bereitstellen muss. Demgegenüber wird als öffentlicher Benutzer bzw. Dokumentbezieher jene Benutzergruppe verstanden, die auf ein vom privaten Benutzer bereitgestelltes elektronisches Dokument zugreifen möchte. In diesem Zusammenhang wird unter passiver Bereitstellung verstanden, dass der Dokumentbereitsteller das elektronische Dokument ungerichtet der Mehrzahl öffentlicher Benutzer zum Zugriff bereit stellt, sodass der Zugriff auf das elektronische Dokument vom öffentlichen Benutzer initiiert wird und der private Benutzer den Zugriff auf das Dokument im Wesentlichen nicht individuell steuern bzw. kontrollieren kann.

Aus Sicherheits-, Datenschutz- und Anonymitätsgründen wird vom privaten Nutzer gegebenenfalls gewünscht, dass das bereitgestellte elektronische Dokument nicht jedem der zumeist anonymen öffentlichen Benutzer zugreifbar ist. Aus dem Stand der Technik ist dazu beispielsweise ein Verfahren bekannt, bei dem sich ein öffentlicher Benutzer gegenüber dem privaten Benutzer identifizieren bzw. authentifizieren muss, woraufhin der private Benutzer das Dokument dem öffentlichen Benutzer freigibt. Dies ist jedoch mit einem deutlichen Verwaltungsaufwand auf Seiten des privaten Benutzers verbunden, da die Zugriffsberechtigung für jeden öffentlichen Benutzer selektiv erteilt werden muss.

Aus dem Stand der Technik ist ferner ein Verfahren bekannt, bei dem sich ein öffentlicher Benutzer gegenüber dem Datenverarbeitungssystem, welchem auch der private Benutzer zugeordnet ist, authentifizieren muss und hernach durch Bereitstellung einer Vertrauensbeziehung durch das Datenverarbeitungssystem, der öffentliche Benutzer auf das private, elektronische Dokument zugreifen kann. Auch bei diesem Verfahren besteht der Nachteil, dass der private Benutzer sein privates, elektronisches Dokument lediglich im vollen Umfang oder nicht zur Verfügung stellen kann. Eine Möglichkeit ein privates, elektronisches Dokument bereit zu stellen und ohne zusätzlichen verwaltungstechnischen Aufwand einem öffentlichen Benutzer lediglich einen eingeschränkten bzw. verschleierten Zugriff auf den Inhalt des Dokuments zu gewähren, ohne dass dafür beispielsweise vom privaten Benutzer weitere entsprechend aufbereitete Versionen des elektronischen Dokuments bereitgestellt werden müssten, ist aus dem Stand der Technik nicht bekannt. Aus Dokument US2005162523 ist ein Verfahren zum Suchen von informationen über ein Gebäude bekannt, wobei der Benutzer ein Foto an die Datenbank schickt und die Antwort ähnliche Gebäude bzw. deren Beschreibung, die bereits im Internet veröffentlicht worden ist, zur Verfügung stellt. Die Aufgabe der Erfindung liegt also darin ein Verfahren zu schaffen, bei dem ein privater Benutzer ein geschütztes und privates elektronisches Dokument einer Öffentlichkeit bereitstellen kann, wobei die Öffentlichkeit durch das bereitgestellte elektronische Dokument nicht auf den tatsächlichen Inhalt des privaten elektronischen Dokuments schließen kann. Insbesondere ist es Aufgabe der Erfindung das Verfahren derart auszubilden, das vom privaten Benutzer keine zusätzlichen Aufbereitungs- bzw. Manipulationsschritte am bereitzustellenden elektronischen Dokument erforderlich sind.

Die Aufgabe der Erfindung wird dadurch gelöst, dass ein erster Benutzer mittels eines Datenendgeräts über ein Kommunikationsnetzwerk eine erste Datenverbindung mit einer Datenverarbeitungseinrichtung herstellt, der erste Benutzer an einem Authentifizierungs- und Zugriffskontrollmodul der Datenverarbeitungseinrichtung eine Benutzerauthentifizierung durchführt und dann nach erfolgter Authentifizierung durch das Authentifizierungs- und Zugriffskontrollmodul, über die Kommunikationsverbindung ein privates elektronisches Dokument von einem Datenendgerät an ein privates Speichermedium der Datenverarbeitungseinrichtung überträgt und in diesem hinterlegt. Durch die Verfahrensschritte ist sichergestellt, dass ein erster Benutzer, der private Benutzer, zuverlässig authentifiziert wurde und daher berechtigt ist, ein geschütztes, privates, elektronisches Dokument im privaten Speichermedium, insbesondere in einem, dem privaten Benutzer eindeutig zugeordneten Speichermedium, zu hinterlegen. Somit ist sichergestellt, dass das hinterlegte, private elektronische Dokument nur für den ersten Benutzer selbst zugreifbar ist. Die Öffentlichkeit, also der zweite Benutzer, kann nicht auf das private Speichermedium des Erstbenutzers zugreifen.

Als Datenendgerät wird in diesem Zusammenhang jedes Gerät verstanden, in welchem elektronische Dokumente abgelegt sein können. Insbesondere fallen darunter Geräte für die Datenverarbeitung, welche ein Benutzer im direkten physischen Zugriff hat, wie bspw. ein Personal-Computer, oder auch Geräte für den mobilen Einsatz, welche zumeist über eine drahtlose erste Datenverbindung mit dem Kommunikationsnetzwerk verbunden sind. Als Datenendgerät wird jedoch auch ein Gerät verstanden, welches nicht im direkten physischen Zugriff durch den Benutzer steht. Beispielsweise kann das Datenendgerät durch ein sogenanntes Cloud-System gebildet sein, auf welches der erste Benutzer über eine Datenkommunikationsverbindung zugreift und von welchem das private elektronische Dokument in den privaten Datenspeicher der Datenverarbeitungseinrichtung übertragen wird. Ohne eine direkte physische Zuordnung des Benutzers zu dem Datenendgerät, besteht durch die datentechnische Kommunikationsverbindung eine logische Zuordnung.

Als elektronisches Dokument wird hierin jedes Dokument verstanden, welches von einer elektronischen Datenverarbeitungseinrichtung bzw. einem Datenendgerät verarbeitet bzw. verwaltet werden kann, insbesondere umfasst dies Schriftstücke, Bilder, Klang- sowie Bewegtbilddokumente.

Die Übertragung eines elektronischen Dokuments kann nun darin bestehen, dass das Dokument kopiert oder verschoben wird, also dass die Hinterlegung eine physische Instanz des elektronischen Dokuments betrifft. Es ist jedoch auch möglich, dass lediglich ein Verweis auf das private elektronische Dokument hinterlegt wird, die physische Instanz des privaten elektronischen Dokuments verbleibt am Datenendgerät des ersten Benutzers.

Als öffentliches Speichermedium wird ein Speichermedium verstanden, welches einer unbekannten und uneingeschränkten Öffentlichkeit Zugriff auf die hinterlegten elektronischen Dokumente gewährt. Öffentlich kann jedoch auch bedeuten, dass einer beschränkten und damit zumeist bekannten Benutzergruppe Zugriff auf elektronische Dokumente gewährt wird. Beispielsweise kann das erfindungsgemäße Verfahren für eine abgeschlossene Gruppe angewendet werden, wobei diese Gruppe durch die Mitglieder einer Vereinigung gebildet ist. Der öffentliche Datenspeicher ist dann für alle Benutzer dieser Gruppe zugänglich, Benutzer außerhalb dieser Gruppe haben jedoch keinen Zugriff.

Die nächsten Verfahrensschritte bestehen darin, dass ein Analyse- und Vergleichsmodul aktiviert wird, welches über eine zweite Datenverbindung auf ein öffentliches Speichermedium zugreift, in welchem öffentlichen Speichermedium eine Mehrzahl öffentlicher elektronischer Dokumente hinterlegt ist. Vom Analyse- und Vergleichsmodul werden das private elektronische Dokument und die öffentlichen elektronischen Dokumenten analysiert und verglichen und für jeden Vergleich ein Übereinstimmungsgrad ermittelt. Diese erfindungsgemäßen Verfahrensschritte gewährleisten, dass aus den im öffentlichen Speichermedium hinterlegten öffentlichen elektronischen Dokumenten für jedes öffentliche Dokument bzw. für eine Untermenge von öffentlichen Dokumenten eine Ähnlichkeitsinformation gebildet wird. Dies wird vom Analyse- und Vergleichsmodul durchgeführt, ohne dass dafür der private Benutzer das bereitgestellte, private elektronische Dokument in irgendeiner Weise aufbereiten müsste.

Greift ein zweiter Benutzer auf das private elektronische Dokument des ersten Benutzers zu, wird vom Authentifizierungs- und Zugriffskontrollmodul, anstelle des privaten elektronischen Dokuments, ein öffentliches elektronisches Dokument aus dem öffentlichen Speichermedium bereitgestellt. Somit ist sichergestellt, dass ein zweiter öffentlicher Benutzer ein Dokument bereit gestellt bekommt, welches dem vom ersten Benutzer hinterlegten geschützten privaten elektronischen Dokument mit dem ermittelten Übereinstimmungsgrad entspricht. Die Sicherung des privaten elektronischen Dokuments ist dadurch gewährleistet, dass vom Inhalt des privaten elektronischen Dokuments nichts der Öffentlichkeit bereitgestellt wird, sondern dass lediglich ein öffentliches Dokument bereitgestellt wird, welches aber mit dem ermittelten Übereinstimmungsgrad dem privaten Dokument ähnlich ist.

In einer Weiterbildung wird zusammen mit dem öffentlichen elektronischen Dokument, der zuvor ermittelte Übereinstimmungsgrad dieses öffentlichen elektronischen Dokuments mit dem privaten elektronischen Dokument übermittelt. Diese Weiterbildung hat den Vorteil, dass der öffentliche Benutzer direkt mit dem übermittelten öffentlichen Dokument eine Information erhält, zu welchem Grad das bereitgestellte Dokument dem privaten Dokument entspricht.

Die Weiterbildung nach der vom Analyse- und Vergleichsmodul ein Verweis auf das öffentliche Dokument zusammen mit dem dafür übermittelten Übereinstimmungsgrad im privaten Speichermedium hinterlegt wird hat den Vorteil, dass beim Zugriff des zweiten Benutzers unmittelbar auf die hinterlegten Daten zugegriffen werden kann, also dass kein Zugriff auf ein externes Speichermittel erforderlich ist, was in einer Steigerung der Zugriffsgeschwindigkeit und in einer vereinfachten Verwaltung resultiert.

Nach einer Weiterbildung stellt das Analyse und Vergleichsmodul dem ersten Benutzer an einer Benutzerschnittstelle eine Auswahl der analysierten und verglichenen öffentlichen elektronischen Dokumente zusammen mit dem Übereinstimmungsgrad und ggf. dem privaten elektronischen Dokument zur Auswahl bereit. Da gegebenenfalls im öffentlichen Speichermedium eine Mehrzahl von Dokumenten hinterlegt sind, welche eine Ähnlichkeit mit dem im privaten Speichermedium hinterlegten privaten elektronischen Dokument haben und somit ein Übereinstimmungsgrad ermittelt wurde, hat diese Weiterbildung den Vorteil, dass der private Benutzer über die Benutzerschnittstelle einen Überblick über die öffentlichen Dokumente sowie den jeweils ermittelten Übereinstimmungsgrad bekommt und dann gezielt jenes Dokument bzw. jene Dokumente auswählen kann, die ein zweiter öffentlicher Benutzer beim Zugriff auf das private Dokument bereitgestellt bekommt. Die Benutzerschnittstelle ist dazu am Datenendgerät des ersten Benutzers vorhanden, sodass der erste Benutzer die Verfahrensschritte der Hinterlegung des privaten elektronischen Dokuments und der Auswahl des bereitzustellenden, öffentlichen Dokuments über das Kommunikationsnetzwerk durchführen kann.

Nach einer Weiterbildung ist im Authentifizierungs- und Zugriffskontrollmodul eine Zugriffs-Berechtigungshierarchie für den zweiten Benutzer hinterlegt, die dem ersten Benutzer an der Benutzerschnittstelle zur individuellen Konfiguration dargestellt wird. Somit kann der erste Benutzer individuell für jeweils einen zweiten Benutzer festlegen, welches von ggf. mehreren möglichen öffentlichen Dokumenten dem Benutzer bereitgestellt wird. Ferner kann auch festgelegt werden, ob dem zweiten Benutzer der Übereinstimmungsgrad bereitgestellt wird. Ebenfalls kann mit dieser Weiterbildung für individuelle zweite Benutzer festgelegt werden, ob das öffentliche elektronische Dokument, oder doch das private elektronische Dokument bereitgestellt wird. Dies ist insbesondere dann von Vorteil, wenn mehrere zweite Benutzer vorhanden sind, die sich in unterschiedliche Vertrauensstufen einteilen lassen. Somit kann der erste Benutzer vertrauenswürdigen zweiten Benutzern ein öffentliches Dokument mit einem höheren Übereinstimmungsgrad bereitstellen, allgemeine zweite Benutzer bekommen ein öffentliches Dokument mit einem geringeren Übereinstimmungsgrad bereitgestellt.

Eine Weiterbildung nach der dem zweiten Benutzer eine Auswahl von elektronischen Dokumenten aus dem öffentlichen Speichermedium und/oder deren jeweiligen Übereinstimmungsgrade, bereitgestellt werden hat den Vorteil, dass der zweite Benutzer dadurch eine bessere Information über das hinterlegte, private elektronische Dokument bekommt, jedoch wiederum ohne Details des privaten elektronischen Dokuments zu veröffentlichen. Die Auswahl, welche beispielsweise wiederum über eine Benutzerschnittstelle bereitgestellt werden kann, gestattet es dem zweiten Benutzer die bereitgestellten Dokumente sowie deren Übereinstimmungsgrade aufzunehmen, um so einen verbesserten Einblick auf das zugrunde liegende private elektronische Dokument zu bekommen.

Zur Vereinfachung und Optimierung des erfindungsgemäßen Verfahrens ist es von Vorteil, wenn vom Analyse- und Vergleichsmodul die ermittelten Übereinstimmungsgrade analysiert werden und dem zweiten Benutzer jenes elektronische Dokument aus dem öffentlichen Speichermedium bereitgestellt wird, dessen Übereinstimmungsgrad über oder unter einem Schwellwert liegt. Durch Festlegung eines Schwellwerts lässt sich gewährleisten, dass nur ein öffentliches, elektronisches Dokument bereitgestellt wird, welches mit dem privaten elektronischen Dokument zumindest mit einem minimalen Grad übereinstimmt. In diesem Fall soll das bereitgestellte, öffentliche Dokument eine gute Übereinstimmung mit dem privaten, elektronischen Dokument aufweisen. Weiterbildungsgemäß ist es jedoch auch möglich, dass der Übereinstimmungsgrad unter einem Schwellwert liegt, wobei in diesem Fall der Inhalt des hinterlegten, privaten, elektronischen Dokuments möglichst gut verschleiert werden soll. Insbesondere können durch Hinterlegung mehrerer Schwellwerte verschiedene Bereitstellungsstufen realisiert werden, sodass es den dem ersten Benutzer jederzeit möglich ist, den Grad der Ähnlichkeit der bereitgestellten, öffentlichen Dokumente zu verändern.

Zur Vereinfachung des erfindungsgemäßen Verfahrens für den ersten Benutzer ist eine Weiterbildung von Vorteil, nach der vom Analyse- und Vergleichsmodul die ermittelten Übereinstimmungsgrade analysiert werden und dem zweiten Benutzer das öffentliche elektronische Dokument mit dem höchsten Übereinstimmungsgrad bereitgestellt wird. Nach Hinterlegen des privaten elektronischen Dokuments im privaten Speichermedium wird weiterbildungsgemäß automatisch jenes öffentliche elektronische Dokument bereitgestellt, welches dem privaten elektronischen Dokument größtmöglich entspricht. Somit ergibt sich für den ersten Benutzer kein zusätzlicher Aufwand zum Schutz des eigenen privaten elektronischen Dokuments. Um den möglichen Personenkreis der Zugriff auf das private, elektronische Dokument haben möchte, einzuschränken, ist eine Weiterbildung von Vorteil, nach der der zweite Benutzer am Authentifizierungs- und Zugriffskontrollmodul eine Benutzerauthentifizierung durchführt. Somit lässt sich festlegen, dass nur ein eingeschränkter Personenkreis grundsätzlich die Möglichkeit hat, auf das private elektronische Dokument des ersten Benutzers zugreifen zu können. In einer Weiterbildung ist es beispielsweise ferner möglich, dass nicht authentifizierten zweiten Benutzern ein öffentliches Dokument mit einem geringeren Übereinstimmungsgrad bereitgestellt wird, während dessen authentifizierte zweite Benutzer ein öffentliches Dokument mit einem höheren Übereinstimmungsgrad bereitgestellt bekommen, da zumeist davon ausgegangen werden kann, dass bei einer Benutzerauthentifizierung zumeist auch ein bestimmtes Maß an Identitätssicherheit gewährleistet ist. Mit dieser Weiterbildung kann ferner eine individuelle Zugriffsabstufung ausgebildet werden, in dem bei der Benutzerauthentifizierung ein hinterlegtes Zugriffsberechtigungsprofil überprüft wird. Der erste Benutzer kann mit diesem Zugriffsberechtigungsprofil für jeden einzelnen zweiten Benutzer, oder für eine oder mehrere Gruppen zweiter Benutzer festlegen, welcher Übereinstimmungsgrad bei der Bereitstellung des öffentlichen elektronischen Dokuments angewendet wird.

Bei elektronischen Dokumenten kann es sich beispielsweise um Bilddokumente, insbesondere um Abbilder eines Gesichts handeln. Daher ist es gemäß einer Weiterbildung von Vorteil, wenn vom Analyse- und Vergleichsmodul die Analyse basierend auf Richtlinien für Dokumente mit Bildmustererkennungsverfahren durchgeführt wird, insbesondere nach den ICAO Richtlinien für Reisedokumente. Von der ICAO wurden eindeutige und insbesondere international gültige Vorschriften festgelegt, um Abbilder menschlicher Gesichter analysieren und eindeutig vergleichen zu können. Mit dieser Weiterbildung ist es insbesondere möglich, dass der erste Benutzer ein Abbild seines Gesichts als privates, elektronisches Dokument hinterlegt und mit dem erfindungsgemäßen Verfahren einen zweiten Benutzer ein Gesichtsfoto, welches in einem öffentlichen Speichermedium hinterlegt ist, bereitgestellt wird, wobei durch die Bereitstellung des Übereinstimmungsgrads der zweite Benutzer ermitteln kann, wie weit das dargestellte Gesichtsbild dem Gesichtsbild des ersten Benutzers entspricht.

Das private, elektronische Dokument kann aber auch ein allgemeines Schriftstück betreffen, sodass es von Vorteil ist, wenn gemäß einer Weiterbildung vom Analyse- und Vergleichsmodul die Analyse basierend auf einer erweiterten Prüfsummenbildung durchgeführt wird. Die Prüfsummenbildung kann beispielsweise mittels eines angepassten, bekannten Hash-Algorithmus erfolgen, wobei die Erweiterung darin liegt, dass von der ermittelten Prüfsumme teilweise auf das zugrunde liegende, elektronische Dokument zurückgeschlossen werden kann.

Das private, elektronische Dokument kann aber auch Klangdokumente betreffen, insbesondere Stimmaufzeichnungen. Um derartige Dokumente miteinander vergleichen zu können, ist es von Vorteil, wenn vom Analyse- und Vergleichsmodul die Analyse basierend auf einer Formantenanalyse durchgeführt wird. Bei einer Formantenanalyse werden die charakteristischen Resonanzfrequenzen ermittelt, welche eindeutig und unverfälschbar einer Person zugeordnet sind, da diese Resonanzfrequenzen durch die körperlichen Gegebenheiten des Stimmapparats der Person festgelegt werden. Mit dieser Weiterbildung ist es nun möglich, dem zweiten Benutzer ein Stimmmuster bereitzustellen, welches der Stimme der ersten Person mit dem Übereinstimmungsgrad entspricht.

Eine Weiterbildung liegt ferner darin, dass vom Analyse- und Vergleichsmodul eine Irisanalyse durchgeführt wird. Die Iris ist als biometrisches Merkmal für eine Person eindeutig festgelegt, sodass durch diese Weiterbildung auch eine biometrische Identifikation mit dem ermittelten Übereinstimmungsgrad möglich ist.

Ebenfalls ist es möglich, dass vom Analyse- und Vergleichsmodul ein erfasstes Bewegungsmuster einer Person analysiert wird.

Der Übereinstimmungsgrad kann als Skalar ermittelt werden, es ist jedoch gemäß einer Weiterbildung möglich, den Übereinstimmungsgrad als mehrdimensionales Wertefeld zu ermitteln. Diese Weiterbildung hat den Vorteil, dass für ein elektronisches Dokument mehrere Charakteristika bei der Analyse ermittelt werden können, wodurch ein individuellerer Vergleich des öffentlichen mit dem privaten Dokument möglich ist. Am Beispiel einer Gesichtsanalyse kann ein Übereinstimmungsgrad jeweils für die Gesichtsform, für die Augenpartie, für die Mundpartie usw. ermittelt werden. Somit kann der zweite Benutzer durch Auswertung des mehrdimensionalen Übereinstimmungsgrads genauer abschätzten, wie weit das bereitgestellte, öffentliche, elektronische Dokument dem privaten, elektronischen Dokument übereinstimmt.

Ein elektronisches Dokument kann ferner mehrere Abschnitte aufweisen, wobei in den einzelnen Abschnitten unterschiedlich sensible Information enthalten ist. Unsensible Information kann daher bedenkenlos veröffentlicht werden, währenddessen sensible Information nur durch ein ähnliches, elektronisches Dokument veröffentlicht werden soll. Daher ist gemäß einer Weiterbildung vorgesehen, dass bei der Bereitstellung des öffentlichen elektronischen Dokuments, zumindest ein Abschnitt des öffentlichen elektronischen Dokuments durch einen Abschnitt des privaten elektronischen Dokuments ersetzt wird. Dem zweiten Benutzer wird somit ein elektronisches Dokument bereitgestellt, welches mit einem Übereinstimmungsgrad dem privaten elektronischen Dokument übereinstimmt, welches jedoch ferner in zumindest einem Abschnitt dem privaten, elektronischen Dokument exakt übereinstimmt. Bei einem Schriftstück könnte der ersetzte Abschnitt beispielsweise einen Dokumenttitel sowie eine Zusammenfassung betreffen, bei einem Bilddokument könnte beispielsweise die Augenpartie ersetzt werden.

Gemäß einer Weiterbildung ist es ferner möglich, dass das öffentliche elektronische Dokument dadurch gebildet wird, dass zumindest ein Abschnitt des privaten elektronischen Dokuments durch einen Abschnitt des öffentlichen elektronischen Dokuments ersetzt wird. Diese Weiterbildung entspricht der vorherigen Weiterbildung, jedoch sind Ausgangs- und Zieldokument vertauscht.

Für die vorherigen Weiterbildungen ist eine Weiterbildung von Vorteil, nach der der erste Benutzer an einer Benutzerschnittstelle des Analyse- und Vergleichsmoduls zumindest einen Abschnitt im privaten elektronischen Dokument festlegt. Somit kann der erste Benutzer gezielt festlegen, welche Information aus dem privaten elektronischen Dokument dem zweiten Benutzer unverändert bereitgestellt werden soll, währenddessen der verbleibende Rest des privaten, elektronischen Dokuments durch ein öffentliches, elektronisches Dokument ersetzt werden soll. Nach der Hinterlegung des ersten elektronischen Dokuments wird dem ersten Benutzer an der Benutzerschnittstelle beispielsweise ein Zusammenfassungsabbild dargestellt, woraufhin der erste Benutzer jenen Abschnitt bzw. jene Abschnitte festlegen kann, welche unverändert bereitgestellt werden sollen. Entsprechend ist diese Weiterbildung auf den Fall anzuwenden, bei dem ein Abschnitt des privaten elektronischen Dokuments durch einen Abschnitt des öffentlichen elektronischen Dokuments ersetzt wird.

Nach einer Weiterbildung ist vorgesehen, dass erste Benutzer an der Benutzerschnittstelle des Analyse- und Vergleichsmoduls einen Ersetzungsgrad festlegt. Neben einem vollständigen Ersatz eines Abschnitts eines elektronischen Dokuments ist auch eine angepasste Ersetzung möglich, in dem ein Abschnitt, oder das gesamte Bild, mit dem angebbaren Ersetzungsgrad ausgetauscht bzw. ineinander übergeführt wird. Für Bilddaten als elektronische Dokumente ist dies bspw. als Morphing bekannt. Dabei lässt sich festlegen, wie stark das zu ersetzende Dokument durch das ersetzende Dokument beeinflusst wird.

Zur Vereinfachung der Dokumentbereitstellung ist eine Weiterbildung von Vorteil, nach der das öffentliche elektronische Dokument in ein Zwischenspeichermedium der Datenverarbeitungseinrichtung übertragen wird. Da bei der Bereitstellung eines öffentlichen elektronischen Dokuments zumeist auf ein Datenverarbeitungssystem zugegriffen wird, welches sich nicht unter der Kontrolle des erfindungsgemäßen Verfahrens befindet, ist die Bereitstellungsqualität nicht gewährleistet. Durch die Weiterbildung wird daher die Bereitstellungssicherheit verbessert.

Wird das öffentliche elektronische Dokument in das private Speichermedium übertragen hat das den Vorteil, dass somit auch das Austauschdokument innerhalb der Zugriffsverwaltung des ersten Benutzers angeordnet ist und somit zumeist eine deutliche Erweiterung der individuellen Beeinflussung der Bereitstellung, insbesondere bezüglich der zweiten Benutzer, gegeben ist.

Die Aufgabe der Erfindung wird auch durch eine Vorrichtung zur Durchführung des erfindungsgemäßen Verfahrens gelöst. Die Vorrichtung umfasst eine Datenverarbeitungseinrichtung, ein Authentifizierungs- und Zugriffskontrollmodul, ein Analyse- und Vergleichsmodul und ein privates Speichermedium, wobei ein öffentliches Speichermedium mit der Datenverarbeitungseinrichtung datentechnisch verbunden ist und dass ferner im privaten Speichermedium zumindest ein privates elektronisches Dokument hinterlegt ist und dass im öffentlichen Speichermedium mehrere öffentliche elektronische Dokumente hinterlegt sind.

Die erfindungsgemäße Aufteilung in ein privates und öffentliches Speichermedium kann beispielsweise dadurch realisiert werden, dass tatsächlich zwei physikalisch getrennte Speichermedien, insbesondere Datenbanksysteme, vorhanden sind. Gemäß einer Weiterbildung ist es jedoch auch möglich, dass das private und das öffentliche Speichermedium in einem gemeinsamen Datenbanksystem angeordnet sind. Datenbanksysteme (DBMS) sind dazu ausgebildet, mehrere getrennte Speichermedien in einem gemeinsamen, physikalischen Verwaltungssystem verfügbar zu halten. Zusammen mit dem Authentifizierungs- und Zugriffskontrollmodul kann für den ersten und zweiten Benutzer zuverlässig gewährleistet werden, dass jeweils auf ein unterschiedliches Speichermedium zugegriffen wird und vor allem, dass der zweite Benutzer nicht direkt auf das private Speichermedium und die darin hinterlegten privaten elektronischen Dokumente zugreifen kann.

Von Vorteil ist ferner eine Weiterbildung, nach der das öffentliche Speichermedium über eine weitere Datenverbindung über das Kommunikationsnetzwerk mit der Datenverarbeitungseinrichtung datentechnisch verbunden ist, da somit ein beliebiger öffentlicher Datenspeicher für das erfindungsgemäße Verfahren verwendet werden kann. Insbesondere ist es dadurch auch möglich, dass der erste Benutzer individuell für jedes bereitgestellte elektronische Dokument ein spezifisches, öffentliches Speichermedium verwenden kann. Da die weitere Datenverbindung über das Kommunikationsnetzwerk gebildet ist, kann somit jedes öffentliche Speichermedium, welches mit dem Kommunikationsnetzwerk verbunden ist, für das erfindungsgemäße Verfahren verwendet werden.

Von Vorteil ist ferner, wenn das Kommunikationsnetzwerk durch ein öffentliches Datenkommunikationsnetzwerk gebildet ist, insbesondere durch ein ungesichertes Kommunikationsnetzwerk wie das Internet, da somit gewährleistet ist, dass der erste Benutzer und insbesondere eine Mehrzahl zweiter Benutzer einen Zugang zu dem Kommunikationsnetzwerk haben und somit auf das vom ersten Benutzer hinterlegte, private elektronische Dokument bzw. das bereitgestellte, öffentliche elektronische Dokument zugreifen können. Das erfindungsgemäße Verfahren hat jedoch somit den ganz besonderen Vorteil, dass auch bei einem öffentlichen und insbesondere ungesicherten Kommunikationsnetzwerk private, sensible Daten eines ersten Benutzers bereitgestellt werden können, wobei der erste Benutzer sicher sein kann, dass das geschützte, private elektronische Dokument nicht unkontrolliert verbreitet werden, dass zweite Benutzer jedoch die Möglichkeit haben, durch das bereitgestellte, öffentliche Dokument zusammen mit dem Übereinstimmungsgrad einen Einblick auf den Inhalt des privaten, elektronischen Dokuments zu erlangen.

Eine Weiterbildung nach der das Analyse- und Vergleichsmodul und das private Speichermedium eine Sicherheitszone ausbilden hat den Vorteil, dass die Komponenten, welche sich mit der Hinterlegung, der Analyse sowie der Zugriffsverwaltung auf den privaten Ablagebereich betreffen, besonders gesichert ausgeführt sein können, beispielsweise können diese Komponenten in einer bautechnisch besonders gesicherten Umgebung angeordnet sein. Da der zweite Benutzer lediglich ein öffentlich verfügbares Dokument bereitgestellt bekommt, insbesondere jedoch keinen direkten Zugriff auf das hinterlegte, private elektronische Dokument des ersten Benutzers hat, kann mit der erfindungsgemäßen Weiterbildung, insbesondere zusätzlich gewährleistet werden, dass ein unerlaubter Zugriff des zweiten Benutzers auf das private Speichermedium des erste Benutzers unmöglich ist. Beispielsweise kann die Sicherheitszone durch einen eigenen Abschnitt in einem Datencenter gebildet sein, es ist jedoch auch eine räumliche und/oder bauliche Trennung von öffentlichen Zonen möglich.

Zum besseren Verständnis der Erfindung wird diese anhand der nachfolgenden Figuren näher erläutert.

Es zeigen jeweils in stark schematisch vereinfachter Darstellung:
- Fig. 1: Eine Ausbildung eines Systems zur Durchführung des erfindungsgemäßen Verfahrens;
- Fig. 2: Eine weitere mögliche Ausbildung eines Systems zur Durchführung des erfindungsgemäßen Verfahrens;
- Fig. 3: Eine schematische Darstellung einer möglichen Bildung eines bereitgestellten elektronischen Dokuments.

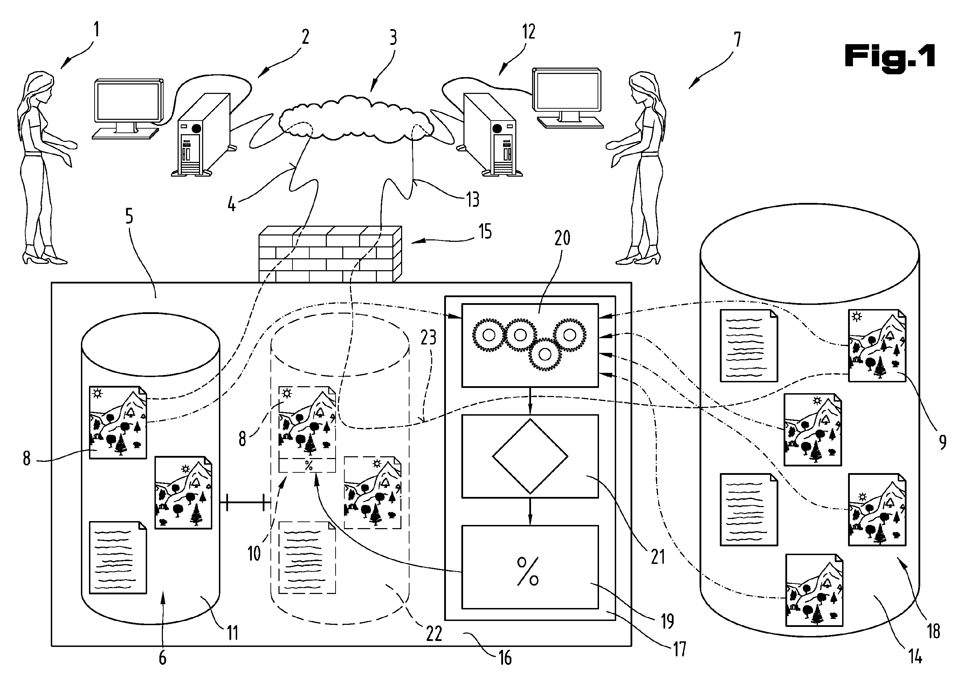

Fig. 1 zeigt eine schematische Darstellung eines Systems zur Durchführung des erfindungsgemäßen Verfahrens, sowie angedeutet die wesentlichen Verfahrensschritte.

Die Erfindung beschäftigt sich mit einem Verfahren bei dem ein erster Benutzer 1 mittels eines ersten Datenendgeräts 2, über ein öffentliches Kommunikationsnetzwerk 3 eine erste Datenverbindung 4 mit einer Datenverarbeitungsvorrichtung 5 herstellt. Der erste Benutzer 1 möchte private elektronische Dokumente 6 einem öffentlichen, zweiten Benutzer 7 bereitstellen, wobei diese Bereitstellung jedoch derart erfolgen soll, dass der zweite Benutzer 7 nicht ein spezifisches, privates elektronisches Dokument 8, sondern ein öffentliches elektronisches Dokument 9 und gegebenenfalls eine dafür ermittelten Übereinstimmungsgrad 10 bereitgestellt bekommt.

Mit dem erfindungsgemäßen Verfahren bzw. der erfindungsgemäßen Vorrichtung wird dies dadurch erreicht, dass der erste Benutzer 1 über ein erstes Datenendgerät über die, mit der Datenverarbeitungseinrichtung 5 hergestellten ersten Datenverbindung 4, ein elektronisches Dokument in einem privaten Datenspeicher 11 hinterlegt, wobei in diesem privaten Datenspeicher 11 mehrere private elektronische Dokumente 6 hinterlegt sein können. Der private Datenspeicher 11 ist beispielsweise als Datenbank in einem Datenbankverwaltungssystem ausgebildet und stellt über eine Zugriffskontrolle sicher, dass nur der berechtigte erste Benutzer 1 Zugriff auf die hinterlegten, privaten elektronischen Dokumente 6 hat.

Ein zweiter Benutzer 7, der mittels eines zweiten Datenendgeräts 12 über das öffentliche Kommunikationsnetzwerk 3 eine zweite Datenverbindung 13 zur Datenverarbeitungseinrichtung 5 aufbaut, bekommt keinen Zugriff auf das private, elektronische Dokument 8, sondern bekommt erfindungsgemäß ein öffentliches, elektronisches Dokument 9 aus einem öffentlichen Speichermedium 14 bereitgestellt. Die Steuerung und Kontrolle des Zugriffs des ersten 1 und zweiten 7 Benutzers auf das private 11 und öffentliche 14 Speichermedium wird durch das Authentifizierungs- und Zugriffskontrollmodul 15 geregelt. Als Authentifizierungs- und Zugriffskontrollmodul 15 werden all jene Komponenten einer Datenverarbeitungseinrichtung 5 verstanden, welche die Zugriffsberechtigungen der einzelnen Benutzer verwalten und regeln, eine Bereitstellung der elektronischen Dokumente ohne Zutun der Benutzer durchführen und insbesondere die Kommunikation der einzelnen Module innerhalb einer Sicherheitszone 16, sowie die Kommunikation mit Modulen außerhalb der Sicherheitszone 16 verwalten. Die Datenverarbeitungseinrichtung 5 kann beispielsweise durch einen Webserver mit angeschlossenem Applikationsserver gebildet sein, wobei das Authentifizierungs- und Zugriffskontrollmodul 15 von den Serverkomponenten gebildet wird. Zur Vereinfachung der Beschreibung wird im Weiteren das Authentifizierungs- und Zugriffskontrollmodul als durchführendes Modul der Dokumentbereitstellung bezeichnet, wobei jedoch die Bereitstellung der Dokumente zumeist vom Webserver bzw. vom Applikationsserver durchgeführt wird, die Zugriffskontrolle jedoch dem Authentifizierungs- und Zugriffskontrollmodul 15 obliegt.

Erfindungsgemäß wird vom einem Analyse- und Vergleichsmodul 17 ein privates, elektronisches Dokument 8 mit mehreren öffentlichen elektronischen Dokumenten 18 analysiert und verglichen, wobei die Analyse- und Vergleichsoperation dahingehend gebildet ist, dass ein Übereinstimmungsgrad 19 zwischen den elektronischen Dokumenten ermittelt wird. Für das zu analysierende private, elektronische Dokument 8 werden aus den im öffentlichen Speichermedium 14 hinterlegten, öffentlichen elektronischen Dokumente 18 hinsichtlich ihrer Inhaltscharakteristika analysiert und mit dem Ausgangsdokument verglichen. Bei Bilddokumenten, insbesondere bei Abbildern von Gesichtern, kann dies Analyse basierend auf Richtlinien erfolgen, welche gemäß international anerkannter Standards zur automatisierten Gesichtserkennung verwendet werden, beispielsweise kann die Analyse nach den ICAO Richtlinien erfolgen. Dabei werden von einem Datenaufbereitungsmodul 20 charakteristische Merkmale in den elektronischen Dokumenten gesucht, beispielsweise wird die Kopfform, Augenabstand sowie unveränderliche Abstände der Gesichtsgeometrie aus dem elektronischen Dokument ermittelt, wobei zur Durchführung des anschließenden Vergleichs eine entsprechende Datenaufbereitung, insbesondere eine Skalierung der Bilddaten erforderlich ist. Bei elektronischen Dokumenten mit Audioinhalt können mit Hilfe einer Frequenzanalyse die sogenannten Formanten ermittelt werden, um so wiederum anschließend den Vergleich der elektronischen Dokumente durchführen zu können.

Nach der Datenaufbereitung werden die aufbereiteten Daten verglichen 21. Wurde für die Analyse der elektronischen Dokumente ein anerkannter und insbesondere weitverbreiteter Standard verwendet, lassen sich die daraus gewonnenen Ergebnisse sehr einfach miteinander vergleichen und somit ein Übereinstimmungsgrad 19 zwischen dem privaten, elektronischen Dokument 8 und jeweils einem öffentlichen elektronischen Dokument 18 angeben. In der Fig. 1 ist das schematisch dadurch dargestellt, dass in einem Zwischenspeichermedium 22 für das private elektronische Dokument 8 ein Verweis 23 auf das öffentliche, elektronische Dokument 9 sowie der für dieses öffentliche Dokument 9 ermittelte Übereinstimmungsgrad 10 hinterlegt ist. Erfindungsgemäß kann jedoch auch für ein privates elektronisches Dokument eine Mehrzahl öffentlicher elektronischer Dokumente hinterlegt bzw. diesem zugeordnet sein, sodass im Zwischenspeichermedium 22 eine entsprechende Anzahl von Verweisen bzw. Übereinstimmungsgrade hinterlegt ist. Das Zwischenspeichermedium kann eigenständig ausgebildet sein, erfindungsgemäß ist es jedoch auch möglich, dass dieses im privaten Speichermedium 11 integriert angeordnet ist.

Beim Zugriff des zweiten Benutzers 7 auf das private elektronische Dokument 8 des ersten Benutzers 1, wird bei Anmeldung des zweiten Benutzers 7 am Authentifizierungs- und Zugriffskontrollmodul 15 von diesem ermittelt, dass der zweite Benutzer 7 nicht auf das private elektronische Dokument 8 zugreifen darf, sondern wird die Zugriffsanfrage entsprechend dem hinterlegten Verweis 23, auf das öffentliche elektronische Dokument 9 umgeleitet bzw. wird dieses öffentliche elektronische Dokument 9 dem zweiten Benutzer 7 bereitgestellt. Gegebenenfalls wird dem zweiten Benutzer 7 ferner der ermittelte Übereinstimmungsgrad 10 bereitgestellt, sodass der zweite Benutzer den Hinweis erhält, dass nicht das gewünschte, private elektronische Dokument dargestellt wird, sondern ein Ersatzdokument, welches zum angegebenen Grad mit dem Originaldokument übereinstimmt. Bei der Hinterlegung des privaten elektronischen Dokumentes 8 im privaten Speichermedium 11 hat der erste Benutzer die Möglichkeit festzulegen, ob dem zweiten Benutzer 7 beim Zugriff der ermittelte Übereinstimmungsgrad bereitgestellt wird, bzw. bei Vorhandensein mehrerer öffentlicher elektronischer Dokumente 18, welches bzw. welche öffentlichen elektronischen Dokumente dem zweiten Benutzer bereitgestellt werden.

Bei der in Fig. 1 dargestellten Ausbildung bleiben die öffentlichen elektronischen Dokumente 18 im öffentlichen Speichermedium 15 hinterlegt, es wird beim Zugriff des zweiten Benutzers 7 auf das private elektronische Dokument 8 des ersten Benutzers 1, lediglich ein Verweis 23 auf das öffentliche, elektronische Dokument 9 übermittelt bzw. wird von der Datenverarbeitungseinrichtung 5 das öffentliche elektronische Dokument 9 aus dem öffentlichen Speichermedium 14 abgeholt und dem zweiten Benutzer 7 bzw. dessen zweiten Datenendgerät 12 über die zweite Datenverbindung 13 bereitgestellt.

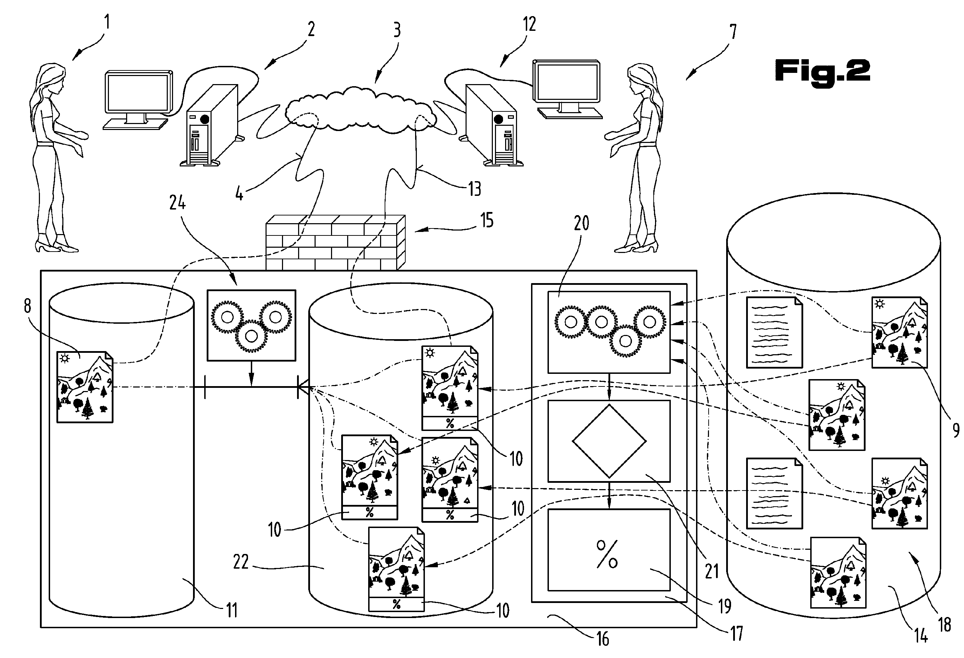

Fig. 2 zeigt eine weitere mögliche Ausbildung des erfindungsgemäßen Vorrichtung bei dem die Austauschdokumente aus dem öffentlichen Speichermedium 14 in das private Speichermedium 11 oder in das Zwischenspeichermedium 22 übertragen werden. Zur Vereinfachung der Darstellung ist die Situation lediglich für ein privates, elektronisches Dokument 8 dargestellt, ferner ist das private Speichermedium 11 und das Zwischenspeichermedium 22 getrennt dargestellt, erfindungsgemäß können diese beiden Speichermedien jedoch auch integriert angeordnet sein. Als wesentlicher Unterschied zu der in Fig. 1 dargestellten Ausbildung ist jedoch, dass die elektronischen Ersatzdokumente nun innerhalb der Sicherheitszone 16 in einem Speichermedium abgelegt sind, und somit vollständig der Kontrolle durch die Datenverarbeitungseinrichtung 5 bzw. des Authentifizierungs- und Kontrollmoduls 15 unterliegen.

Beim Zugriff des zweiten Benutzers 7 wird diesem anstelle des privaten elektronischen Dokuments 8 eines der für dieses Dokument hinterlegten öffentlichen Dokumente 9 bereitgestellt, wobei die Auswahl des bereitzustellenden Dokuments vom ersten Benutzer bei der Hinterlegung des privaten elektronischen Dokument 8 im privaten Speichermedium 11 in einer Zuordnungstabelle in einem Zuordnungsauswahlmodul 24 hinterlegt werden kann. Insbesondere kann der erste Benutzer festlegen, ob bei Vorhandensein mehrerer möglicher öffentlicher elektronischer Dokument 9, dem zweiten Benutzer 7 eines oder mehrere dieser Dokumente bereitgestellt wird und ferner ob der übermittelte Übereinstimmungsgrad 10 dem zweiten Benutzer 7 bereitgestellt wird.

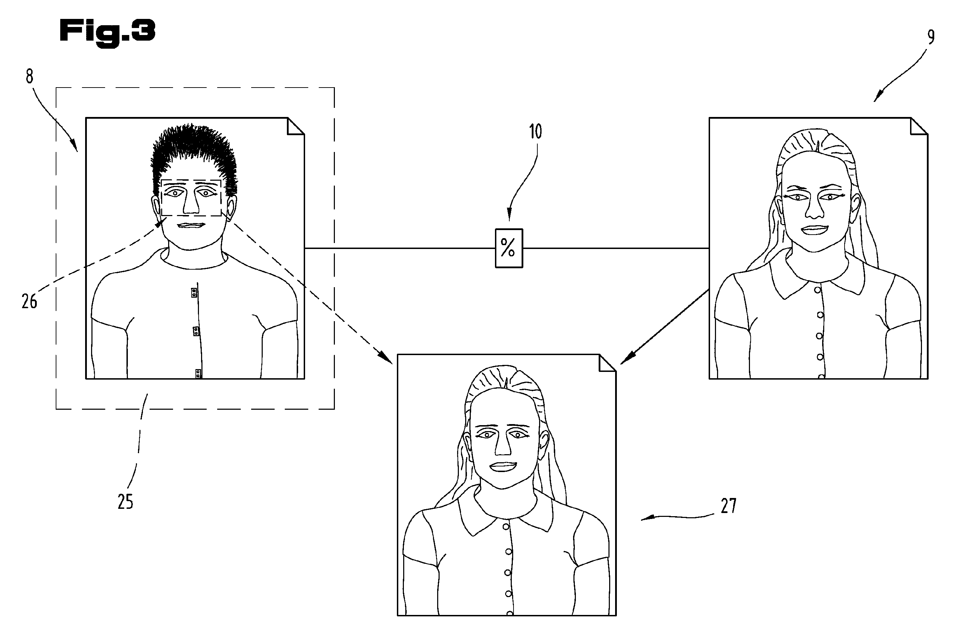

Fig. 3 zeig eine weitere mögliche Ausbildung des erfindungsgemäßen Verfahrens, bei dem in den, den zweiten Benutzer bereitgestellten elektronischen Dokument zumindest ein Abschnitt des öffentlichen, elektronischen Dokuments durch einen Abschnitt des privaten, elektronischen Dokuments ersetzt wird bzw. umgekehrt, dass ein Abschnitt des privaten elektronischen Dokument durch einen Abschnitt des öffentlichen, elektronischen Dokuments ersetzt wird.

In Fig. 3 ist der Fall dargestellt, dass ein Abschnitt des öffentlichen Dokuments, durch einen Abschnitt des privaten Dokuments ersetzt wird. Bei der Durchführung der Analyse und des Vergleichs der elektronischen Dokumente bekommt der erste Benutzer an einer Benutzerschnittstelle 25 das hinterlegte, private elektronische Dokument 8 dargestellt und kann in dieser Darstellung einen Abschnitt 26 festlegen, welcher Abschnitt in dem, dem zweiten Benutzer bereitgestellten elektronischen Dokument 27 unverändert bzw. nicht ausgetauscht dargestellt werden soll. Für die in Fig. 3 dargestellten Bilddaten als elektronische Dokumente hat dies den Vorteil, dass der erste Benutzer sein Abbild verschleiern kann, durch Bekanntgabe eines unveränderten Abschnitts jedoch einen Teil seines tatsächlichen Abbilds bekannt geben kann. Im Fall von Schriftstücken kann der bereitzustellende Abschnitt beispielsweise in der Überschrift bzw. einer Zusammenfassung bestehen, der restliche Inhalt des Schriftstücks bleibt dem zweiten Benutzer verborgen, da dafür der Inhalt des öffentlichen elektronischen Dokuments bereitgestellt wird.

Beim Zugriff des zweiten Benutzers auf das private elektronische Dokument des ersten Benutzers wird nun durch das erfindungsgemäße Verfahren ein elektronisches Dokument 27 bereitgestellt, welches den Inhalt des mit einem bestimmen Übereinstimmungsgrad 10 ermittelten, öffentlichen elektronischen Dokuments 9 generiert und zusätzlich wird diesem generierten Dokument der Abschnitt 26 des privaten, elektronischen Dokuments 8 derart überlagert, dass dieser den betreffenden Abschnitt des öffentlichen, elektronischen Dokuments ersetzt. Für den Fall von Bilddaten ist dazu beispielsweise eine Skalierung der Bilddaten erforderlich, um eine entsprechende Deckung des ersetzten Abschnittes mit dem zugrundeliegenden Abschnitt zu erreichen. Bei der Analyse des bereitgestellten, elektronischen Dokuments 27 durch den zweiten Benutzer soll dieser jedoch nicht die Möglichkeit haben, aus dem bereitgestellten Dokument auf das ursprüngliche Dokument 8 rückschließen zu können, auch nicht unter Berücksichtigung des Übereinstimmungsgrades 10.

In einer Weiterbildung können auch mehrere Abschnitte 26 vorgesehen sein, wobei der erste Benutzer insbesondere durch Konfiguration des Authentifikations- und Zugriffskontrollmoduls individuell festlegen kann, welcher zweite Benutzer bzw. welche zweite Benutzergruppe welche Ausprägung des elektronischen Dokuments 27 bereitgestellt bekommt.

Abschließend wird festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Verfahrens zur öffentlichen Bereitstellung geschützter elektronischer Dokumente wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In der Fig. 2 ist eine weitere und gegebenenfalls für sich eigenständige Ausführungsform des Systems zur Durchführung des Verfahrens gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in der vorangegangenen Fig. 1 hingewiesen bzw. Bezug genommen.

Der Ordnung halber sei abschließend darauf hingewiesen, dass zum besseren Verständnis des Aufbaus des Systems zur Durchführung des Verfahrens zur öffentlichen Bereitstellung geschützter elektronischer Dokumente diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Erster Benutzer
- 2: Erstes Datenendgerät
- 3: Kommunikationsnetzwerk
- 4: Erste Datenverbindung
- 5: Datenverarbeitungseinrichtung

- 6: Private elektronische Dokumente
- 7: Zweiter Benutzer
- 8: Privates elektronisches Dokument
- 9: Öffentliches elektronisches Dokument
- 10: Übereinstimmungsgrad

- 11: Privates Speichermedium
- 12: Zweites Datenendgerät
- 13: Zweite Datenverbindung
- 14: Öffentliches Speichermedium
- 15: Authentifikations- und Zugriffskontrollmodul

- 16: Sicherheitszone
- 17: Analyse- und Vergleichsmodul
- 18: Öffentliche elektronische Dokumente
- 19: Übereinstimmungsgrad
- 20: Datenaufbereitungsmodul

- 21: Vergleichsmodul
- 22: Zwischenspeichermedium
- 23: Verweis
- 24: Zuordnungsauswahlmodul
- 25: Benutzerschnittstelle

- 26: Abschnitt
- 27: Bereitgestelltes elektronisches Dokument

## Patentansprüche

1. Verfahren zur öffentlichen Bereitstellung geschützter elektronischer Dokumente, wobei:
• ein erster Benutzer mittels eines Datenendgeräts über ein Kommunikationsnetzwerk eine erste Datenverbindung mit einer Datenverarbeitungseinrichtung herstellt;
• der erste Benutzer an einem Authentifizierungs- und Zugriffskontrollmodul der Datenverarbeitungseinrichtung eine Benutzerauthentifizierung durchführt;
• der erste Benutzer nach erfolgter Authentifizierung durch das Authentifizierungs- und Zugriffskontrollmodul, über die Kommunikationsverbindung ein privates elektronisches Dokument von einem Datenendgerät an ein privates Speichermedium der Datenverarbeitungseinrichtung überträgt und in diesem hinterlegt;
• ein Analyse- und Vergleichsmodul aktiviert wird, welches über eine zweite Datenverbindung auf ein öffentliches Speichermedium zugreift, in welchem öffentlichen Speichermedium eine Mehrzahl öffentlicher elektronischer Dokumente hinterlegt ist;
• vom Analyse- und Vergleichsmodul das private elektronische Dokument mit den öffentlichen elektronischen Dokumenten analysiert und verglichen wird und für jeden Vergleich ein Übereinstimmungsgrad ermittelt wird;
• beim Zugriff eines zweiten Benutzers auf das private elektronische Dokument des ersten Benutzers, vom Authentifizierungs- und Zugriffskontrollmodul, anstelle des privaten elektronischen Dokuments, ein öffentliches elektronisches Dokument aus dem öffentlichen Speichermedium bereitgestellt wird.

2. Verfahren nach Anspruch 1, **dadurch gekennzeichnet, dass** zusammen mit dem öffentlichen elektronischen Dokument, der zuvor ermittelte Übereinstimmungsgrad dieses öffentlichen elektronischen Dokuments mit dem privaten elektronischen Dokument bereitgestellt wird.

3. Verfahren nach Anspruch 1, **dadurch gekennzeichnet, dass** vom Analyse- und Vergleichsmodul ein Verweis auf das öffentliche Dokument zusammen mit dem dafür übermittelten Übereinstimmungsgrad im privaten Speichermedium hinterlegt wird.

4. Verfahren nach Anspruch 1, **dadurch gekennzeichnet, dass** das Analyse- und Vergleichsmodul dem ersten Benutzer an einer Benutzerschnittstelle eine Auswahl der analysierten und verglichenen öffentlichen elektronischen Dokumente zusammen mit dem Übereinstimmungsgrad und ggf. dem privaten elektronischen Dokument zur Auswahl bereitstellt.

5. Verfahren nach Anspruch 4, **dadurch gekennzeichnet, dass** im Authentifizierungs- und Zugriffskontrollmodul eine Zugriffs-Berechtigungshierarchie für den zweiten Benutzer hinterlegt ist, die dem ersten Benutzer an der Benutzerschnittstelle zur individuellen Konfiguration dargestellt wird.

6. Verfahren nach Anspruch 1, **dadurch gekennzeichnet, dass** dem zweiten Benutzer eine Auswahl von elektronischen Dokumenten aus dem öffentlichen Speichermedium und/oder deren jeweiligen Übereinstimmungsgrade, bereitgestellt werden.

7. Verfahren nach Anspruch 1, **dadurch gekennzeichnet, dass** vom Analyse- und Vergleichsmodul die ermittelten Übereinstimmungsgrade analysiert werden und dem zweiten Benutzer jenes elektronische Dokument aus dem öffentlichen Speichermedium bereitgestellt wird, dessen Übereinstimmungsgrad über oder unter einem Schwellwert liegt.

8. Verfahren nach Anspruch 1, **dadurch gekennzeichnet, dass** vom Analyse- und Vergleichsmodul die ermittelten Übereinstimmungsgrade analysiert werden und dem zweiten Benutzer das öffentliche elektronische Dokument mit dem höchsten Übereinstimmungsgrad bereitgestellt wird.

9. Verfahren nach Anspruch 1, **dadurch gekennzeichnet, dass** der zweite Benutzer am Authentifizierungs- und Zugriffskontrollmodul eine Benutzerauthentifizierung durchführt.

10. Verfahren nach Anspruch 1, **dadurch gekennzeichnet, dass** vom Analyse- und Vergleichsmodul die Analyse basierend auf Richtlinien für Dokumente mit Bildmustererkennungsverfahren durchgeführt wird, insbesondere nach den ICAO Richtlinien für Reisedokumente.

11. Verfahren nach Anspruch 1, **dadurch gekennzeichnet, dass** vom Analyse- und Vergleichsmodul die Analyse basierend auf einer erweiterten Prüfsummenbildung durchgeführt wird.

12. Verfahren nach Anspruch 1, **dadurch gekennzeichnet, dass** vom Analyse- und Vergleichsmodul die Analyse basierend auf einer Formantenanalyse durchgeführt wird.

13. Verfahren nach Anspruch 1, **dadurch gekennzeichnet, dass** vom Analyse- und Vergleichsmodul eine Irisanalyse durchgeführt wird.

14. Verfahren nach Anspruch 1, **dadurch gekennzeichnet, dass** vom Analyse- und Vergleichsmodul ein erfasstes Bewegungsmuster einer Person analysiert wird.

15. Verfahren nach Anspruch 1, **dadurch gekennzeichnet, dass** der Übereinstimmungsgrad als mehrdimensionales Wertefeld ermittelt wird.

16. Verfahren nach Anspruch 1, **dadurch gekennzeichnet, dass** bei der Bereitstellung des öffentlichen elektronischen Dokuments, zumindest ein Abschnitt des öffentlichen elektronischen Dokuments durch einen Abschnitt des privaten elektronischen Dokuments ersetzt wird.

17. Verfahren nach Anspruch 1, **dadurch gekennzeichnet, dass** das öffentliche elektronische Dokument dadurch gebildet wird, dass zumindest ein Abschnitt des privaten elektronischen Dokuments durch einen Abschnitt des öffentlichen elektronischen Dokuments ersetzt wird.

18. Verfahren nach Anspruch 16 oder 17, **dadurch gekennzeichnet, dass** der erste Benutzer an einer Benutzerschnittstelle des Analyse- und Vergleichsmoduls zumindest einen Abschnitt im privaten elektronischen Dokument festlegt.

19. Verfahren nach Anspruch 16 oder 17, **dadurch gekennzeichnet, dass** der erste Benutzer an der Benutzerschnittstelle des Analyse- und Vergleichsmoduls einen Ersetzungsgrad festlegt.

20. Verfahren nach Anspruch 1, **dadurch gekennzeichnet, dass** das öffentliche elektronische Dokument in ein Zwischenspeichermedium der Datenverarbeitungseinrichtung übertragen wird.

21. Verfahren nach Anspruch 1, **dadurch gekennzeichnet, dass** das öffentliche elektronische Dokument in das private Speichermedium übertragen wird.

22. Vorrichtung zur Durchführung eines Verfahrens zur öffentlichen Bereitstellung geschützter elektronischer Dokumente nach Anspruch 1,
**dadurch gekennzeichnet, dass**
eine Datenverarbeitungseinrichtung ein Authentifizierungs- und Zugriffskontrollmodul, ein Analyse- und Vergleichsmodul und ein privates Speichermedium aufweist,
dass ferner ein öffentliches Speichermedium mit der Datenverarbeitungseinrichtung datentechnisch verbunden ist
und dass im privaten Speichermedium zumindest ein privates elektronisches Dokument hinterlegt ist
und dass im öffentlichen Speichermedium mehrere öffentliche elektronische Dokumente hinterlegt sind.

23. Vorrichtung nach Anspruch 22, **dadurch gekennzeichnet, dass** das private und das öffentliche Speichermedium in einem gemeinsamen Datenbanksystem angeordnet sind.

24. Vorrichtung nach Anspruch 22, **dadurch gekennzeichnet, dass** das öffentliche Speichermedium über eine weitere Datenverbindung über das Kommunikationsnetzwerk mit der Datenverarbeitungseinrichtung datentechnisch verbunden ist.

25. Vorrichtung nach Anspruch 22, **dadurch gekennzeichnet, dass** das Kommunikationsnetzwerk durch ein öffentliches Datenkommunikationsnetzwerk gebildet ist, insbesondere durch ein ungesichertes Kommunikationsnetzwerk wie das Internet.

26. Vorrichtung nach Anspruch 22, **dadurch gekennzeichnet, dass** das Authentifizierungs- und Zugriffskontrollmodul, das Analyse- und Vergleichsmodul und das private Speichermedium eine Sicherheitszone ausbilden.

## Claims

1. Method for publicly providing protected electronic documents, wherein:
• a first user establishes a first data connection with a data processing device by means of a data end device via a communication network;
• the first user performs a user authentication at an authentication and access control module of the data processing device;
• the first user, after completing the authentication by the authentication and access control module, transfers a private electronic document via the communication connection from a data end device to a private storage medium of the data processing device and saves it therein;
• an analysis and comparison module is activated, which via a second data connection has access to a public storage medium, in which public storage medium a plurality of public electronic documents are saved;
• by means of the analysis and comparison module the private electronic document is analyzed and compared with the public electronic documents and for each comparison a degree of matching is determined;
• during the access of a second user to the private electronic document of the first user by means of the authentication and access control module a public electronic document is provided from the public storage medium, instead of the private electronic document.

2. Method according to claim 1, **characterized in that** together with the public electronic document, the previously defined degree of matching of said public electronic document is provided with the private electronic document.

3. Method according to claim 1, **characterized in that** a reference to the public document together with the transmitted degree of matching for the latter is saved in the private storage medium by means of the analysis and comparison module.

4. Method according to claim 1, **characterized in that** the analysis and comparison module provides the first user at a user interface with a selection of analyzed and compared public electronic documents together with the degree of matching and possibly the private electronic document for selection.

5. Method according to claim 4, **characterized in that** an access authorization hierarchy for the second user is saved in the authentication and access control module which is shown to the first user at the user interface for individual configuration.

6. Method according to claim 1, **characterized in that** the second user is provided with a selection of electronic documents from the public storage medium and/or with the respective degrees of matching.

7. Method according to claim 1, **characterized in that** the defined degrees of matching are analyzed by means of the analysis and comparison module and the second user is provided with the particular electronic document from the public storage medium for which the degree of matching lies above or below a threshold.

8. Method according to claim 1, **characterized in that** the defined degrees of matching are analyzed by means of the analysis and comparison module and the second user is provided with the public electronic document with the highest degree of matching.

9. Method according to claim 1, **characterized in that** the second user performs a user authentication at the authentication and access control module.

10. Method according to claim 1, **characterized in that** the analysis is performed by means of the analysis and comparison module on the basis of guidelines for documents by image pattern recognition methods, in particular according to the ICAO guidelines for travel documents.

11. Method according to claim 1, **characterized in that** the analysis is performed by the analysis and comparison module on the basis of an extended checksum formation.

12. Method according to claim 1, **characterized in that** the analysis is performed by the analysis and comparison module on the basis of a formant analysis.

13. Method according to claim 1, **characterized in that** iris recognition is performed by the analysis and comparison module.

14. Method according to claim 1, **characterized in that** a detected movement pattern of a person is analyzed by the analysis and comparison module.

15. Method according to claim 1, **characterized in that** the degree of matching is defined as a multidimensional value field.

16. Method according to claim 1, **characterized in that** on the provision of the public electronic document at least one section of the public electronic document is replaced by a section of the private electronic document.

17. Method according to claim 1, **characterized in that** the public electronic document is prepared, that at least one section of the private electronic document is replaced by a section of the public electronic document.

18. Method according to claim 16 or 17, **characterized in that** the first user determines at least one section in the private electronic document at a user interface of the analysis and comparison module.

19. Method according to claim 16 or 17, **characterized in that** the first user determines the degree of substitution at the user interface of the analysis and comparison module.

20. Method according to claim 1, **characterized in that** the public electronic document is transferred into an intermediate storage medium of the data processing device.

21. Method according to claim 1, **characterized in that** the public electronic document is transferred into the private storage medium.

22. Device for performing a method for publicly providing protected electronic documents according to claim 1,
**characterized in that**
a data processing device comprises an authentication and access control module, an analysis and comparison module and a private storage medium,
that also a public storage medium is connected to the data processing device by data technology,
and that in the private storage medium at least one private electronic document is saved, and that in the public storage medium a plurality of public electronic documents are saved.

23. Device according to claim 22, **characterized in that** the private and the public storage medium are arranged in a common database system.

24. Device according to claim 22, **characterized in that** the public storage medium is connected by data technology by an additional data connection via the communication network to the data processing device.

25. Device according to claim 22, **characterized in that** the communication network is formed by a public data communication network, in particular by an unsecured communication network such as the internet.

26. Device according to claim 22, **characterized in that** the authentication and access control module, the analysis and comparison module and the private storage medium form a safety zone.

## Revendications

1. Procédé pour la mise à disposition publique de documents électroniques protégés, dans lequel:
- un premier utilisateur, au moyen d'un terminal, établit une première liaison de données avec un dispositif de traitement de données via un réseau de communication;
- le premier utilisateur effectue une authentification de l'utilisateur sur un module d'authentification et de contrôle d'accès du dispositif de traitement de données;
- lorsque le module d'authentification et de contrôle d'accès a validé l'authentification, le premier utilisateur transmet via la liaison de communication un document électronique privé depuis un terminal vers un support de mémoire privé du dispositif de traitement de données et l'enregistre dans ce dernier;
- un module d'analyse et de comparaison est activé, lequel accède à un support de mémoire public via une deuxième liaison de données, dans lequel support de mémoire public est enregistrée une pluralité de documents électroniques publics;
- le document électronique privé est analysé et comparé aux documents électroniques publics par le module d'analyse et de comparaison, et un degré de concordance est déterminé pour chaque comparaison;
- lorsqu'un deuxième utilisateur accède au document électronique privé du premier utilisateur, un document électronique public issu du support de mémoire public est mis à disposition par le module d'authentification et de contrôle d'accès en lieu et place du document électronique privé.

2. Procédé selon la revendication 1, **caractérisé en ce que** le niveau de concordance déterminé préalablement entre ce document électronique public et le document électronique privé est mis à disposition conjointement avec le document électronique public.

3. Procédé selon la revendication 1, **caractérisé en ce que** le module d'analyse et de comparaison enregistre dans le support de mémoire privé une référence au document électronique public conjointement avec le degré de concordance transmis pour celui-ci.

4. Procédé selon la revendication 1, **caractérisé en ce que** le module d'analyse et de comparaison met à la disposition du premier utilisateur sur une interface utilisateur une liste de documents électroniques publics analysés et comparés conjointement avec le degré de concordance et, le cas échéant, le document électronique privé, en vue d'une sélection.

5. Procédé selon la revendication 4, **caractérisé en ce que** dans le module d'authentification et de contrôle d'accès est enregistrée une hiérarchie d'autorisation d'accès pour le deuxième utilisateur, qui est affichée pour le premier utilisateur sur l'interface utilisateur en vue d'une configuration individuelle.

6. Procédé selon la revendication 1, **caractérisé en ce qu'**une liste de documents électroniques issus du support de mémoire public et/ou leurs degrés de concordance sont mis à la disposition du deuxième utilisateur.

7. Procédé selon la revendication 1, **caractérisé en ce que** les degrés de concordance déterminés sont analysés par le module d'analyse et de comparaison, et le document électronique issu du support de mémoire public, dont le degré de concordance est supérieur ou inférieur à une valeur seuil, est mis à la disposition du deuxième utilisateur.

8. Procédé selon la revendication 1, **caractérisé en ce que** les degrés de concordance déterminés sont analysés par le module d'analyse et de comparaison et le document électronique public avec le plus haut degré de concordance est mis à la disposition du deuxième utilisateur.

9. Procédé selon la revendication 1, **caractérisé en ce que** le deuxième utilisateur effectue une authentification de l'utilisateur sur le module d'authentification et de contrôle d'accès.

10. Procédé selon la revendication 1, **caractérisé en ce que** le module d'analyse et de comparaison effectue l'analyse avec un procédé de reconnaissance d'images sur la base des directives pour documents, en particulier selon les directives OACI pour les documents de voyage.

11. Procédé selon la revendication 1, **caractérisé en ce que** le module d'analyse et de comparaison effectue l'analyse sur la base d'une formation de somme de contrôle élargie.

12. Procédé selon la revendication 1, **caractérisé en ce que** le module d'analyse et de comparaison effectue l'analyse sur la base d'une analyse des formants.

13. Procédé selon la revendication 1, **caractérisé en ce que** le module d'analyse et de comparaison effectue une analyse de l'iris.

14. Procédé selon la revendication 1, **caractérisé en ce que** le module d'analyse et de comparaison analyse un modèle de mouvement enregistré d'une personne.

15. Procédé selon la revendication 1, **caractérisé en ce que** le degré de concordance est déterminé sous la forme de champ de valeurs pluridimensionnel.

16. Procédé selon la revendication 1, **caractérisé en ce que** lors de la mise à disposition du document électronique public, au moins une partie du document électronique public est remplacée par une partie du document électronique privé.

17. Procédé selon la revendication 1, **caractérisé en ce que** le document électronique public est formé par le fait qu'au moins une partie du document électronique privé est remplacée par une partie du document électronique public.

18. Procédé selon la revendication 16 ou 17, **caractérisé en ce que** le premier utilisateur, sur l'interface utilisateur du module d'analyse et de comparaison, définit au moins une partie dans le document électronique privé.

19. Procédé selon la revendication 16 ou 17, **caractérisé en ce que** le premier utilisateur, sur l'interface utilisateur du module d'analyse et de comparaison, définit un degré de remplacement.

20. Procédé selon la revendication 1, **caractérisé en ce que** le document électronique public est transféré dans un support de mémoire intermédiaire du dispositif de traitement de données.

21. Procédé selon la revendication 1, **caractérisé en ce que** le document électronique public est transféré dans le support de mémoire privé.

22. Dispositif permettant la mise en oeuvre d'un procédé pour la mise à disposition publique de documents électroniques protégés selon la revendication 1, **caractérisé en ce qu'**un dispositif de traitement de données comporte un module d'authentification et de contrôle d'accès, un module d'analyse et de comparaison et un support de mémoire privé,
**en ce que**, en outre, un support de mémoire public est relié selon la technique de transmission des données au dispositif de traitement de données,
et **en ce que** dans le support de mémoire privé est enregistré au moins un document électronique privé,
et **en ce que** dans le support de mémoire public sont enregistrés plusieurs documents électroniques publics.

23. Dispositif selon la revendication 22, **caractérisé en ce que** le support de mémoire privé et public sont disposés dans un système de base de données commun.

24. Dispositif selon la revendication 22, **caractérisé en ce que** le support de mémoire public est relié selon la technique de transmission des données au dispositif de traitement de données par l'intermédiaire d'une autre liaison de données via le réseau de communication.

25. Dispositif selon la revendication 22, **caractérisé en ce que** le réseau de communication est formé par un réseau de communication de données publiques, en particulier par un réseau de communication non sécurisé, tel que l'Internet.

26. Dispositif selon la revendication 22, **caractérisé en ce que** le module d'authentification et de contrôle d'accès, le module d'analyse et de comparaison et le support de mémoire privé constituent une zone de sécurité.
